# EUROPEAN PATENT SPECIFICATION

(11) **EP 1 940 109 B1**
(45) Date of publication and mention of the grant of the patent: **28.03.2012**
(21) Application number: 07024902.4
(22) Date of filing: 21.12.2007
(51) Int. Cl.: H04L 29/06

(54) **Method for monitoring stream processor for failure detection**
Verfahren zum Überwachen von Stromprozessoren zum Erkennen von Fehlern
Procede pour controller des processeur de streamer pour detecter des erreur

(30) Priority: 28.12.2006 US 617189
(43) Date of publication of application: 02.07.2008
(73) Proprietor: Nortel Networks Limited, St. Laurent, QC H4S 2A9 (CA)
(72) Inventor: Soukup, Martin Jan, Ottawa Ontario K1V 1Y3 (CA); Meier, Martin, Ottawa Ontario K1Z 8M6 (CA); Nannra, Anoop, Orleans Ontario K4A 4M1 (CA)
(74) Representative: Boyce, Conor

(56) References cited:
- WO-A-02/067120
- WO-A-2006/107883
- US-A- 5 974 503
- US-A1- 2004 199 578

## Description

### Field of the Invention

The present invention relates to processing multicast content streams, and in particular to balancing the loads of multiple stream processors, as well as providing failover protection when an active stream processor fails.

### Background of the Invention

With the evolution of the Internet, users are demanding real time access to various types of media content, including audio and video content. Virtually any type of content may be streamed in real time to any number of end users. When numerous end users wish to see the same content at the same time, multicasting is often employed to avoid sending individual dedicated streams to each end user. Instead, a content source may send out a single stream with a dedicated multicast address, which allows the various end users to receive the streaming content. Network routers and the like can recognize multicast destination addresses, and distribute different streams to the different end users as necessary to ensure that the appropriate end users receive the streaming content. As such, multicasting provides an efficient way to send streaming content to multiple end users.

In many applications, the streaming content must be processed prior to being delivered to the end users. The type of processing will depend on the type of content being streamed and the particular application associated with the streaming content. In audio and video applications, the processing may include but is not limited to encryption, transcoding, compression, protocol conversion, watermarking, advertisement insertion, content manipulation, and the like. Such processing is typically referred to as application layer processing, wherein content associated with Layers 4-7 is modified and processed.

In many instances, service providers need to take measures to ensure the delivery of multicast streams to end users. To ensure delivery of the multicast streams, service providers often require failover protection, and as such, incorporate redundancy in the network architecture. Typical network architectures incorporate redundant stream processors for each multicast stream, for example as disclosed in WO 02/067120 and WO 2006/107883, as illustrated in Figure 1. Figure 1 illustrates a communication environment 10 wherein a content source 12 can deliver multicast content to various end users associated with endpoints 14. Multicast content is provided in multicast streams to multiple upstream routers 16, which forward the multicast streams to appropriate stream processors 18 to provide any necessary Layer 4-7 processing. As illustrated, stream processor A1 and stream processor A2 receive the same multicast stream and provide the same processing for the multicast stream. As such, multicast streams are provided to both stream processors A1 and A2, which process the streams in parallel and forward the processed streams to appropriate downstream routers 20. The downstream routers 20 will then multicast one or all of the processed streams to the appropriate endpoints 14.

Stream processors B1 and B2 operate in a similar fashion. Stream processors A1 and A2 may provide the same processing as stream processors B1 and B2 for the same or different multicast streams, depending on the network configuration. Alternatively, stream processors A1 and A2 may provide different processing for the same or different multicast streams than stream processors B1 and B2. Providing one-to-one redundancy among the stream processors 18 results in a robust network architecture; however, such a network architecture is excessively expensive and very complex to deploy. Further, there is no way to effectively balance the loads among the stream processors 18. Even if certain pairs of stream processors 18 are overloaded, other stream processors 18 that could provide the same functionality may be running well under capacity.

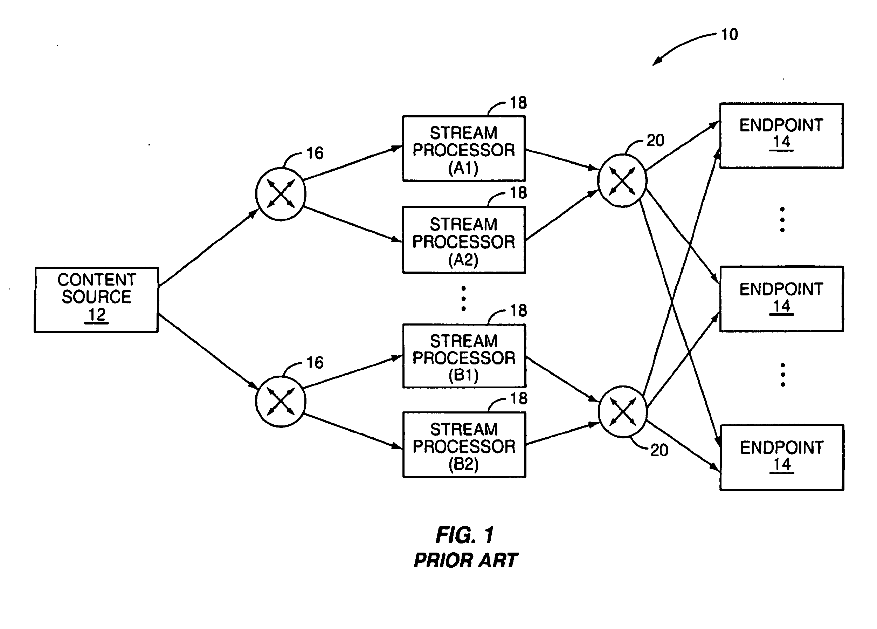

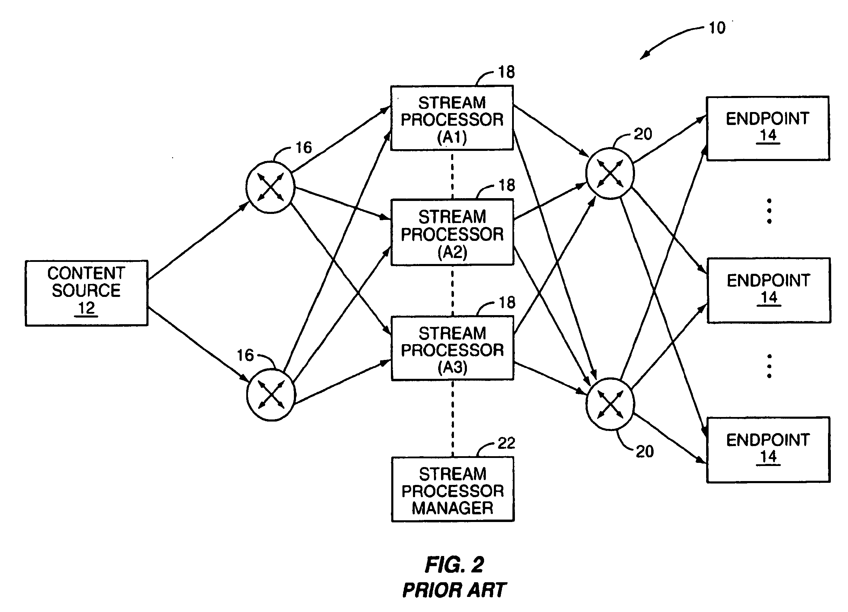

To address the inefficiencies of the system of the network architecture illustrated in Figure 1, service providers have incorporated a stream processor manager 22 as illustrated in Figure 2, to control the stream processors 18 in a more efficient manner. In particular, the number of stream processors 18 is effectively reduced by having the stream processor manager 22 allow certain stream processors 18 to act as redundant backups for multiple stream processors 18. For example, stream processor A2 may act as a redundant backup for both stream processors A1 and A3. However, the architecture is still inefficient, since all of the stream processors 18 employed for a given multicast session are constantly processing each of the redundant multicast streams. Further, load balancing remains an issue. Accordingly, there is a need for a more efficient multicast processing architecture that is capable of providing failover protection. There is a further need to provide load balancing in such a system in an efficient and effective manner.

### Summary of the Invention

The present invention provides a method of processing a multicast stream as claimed in claim 1. Embodiments of the invention provide a load balancer that is capable of receiving and identifying multicast streams associated with a multicast session, and selecting at least one of the multicast streams for delivery to a selected stream processor. The selected stream processor is selected from a group of stream processors that are capable of providing the Layer 4-7 processing required for the multicast stream. The load balancer will monitor the processed multicast stream provided by the output of the selected stream processor, and send the processed multicast stream toward its destination. The load balancer can detect a failure in the selected stream processor by monitoring the output of the selected stream processor. If there is a failure of the selected stream processor, the load balancer will select another stream processor for processing the multicast stream, and redirect the multicast stream from the failed stream processor to the selected stream processor, wherein the process continues.

As such, different stream processors do not need to redundantly process the same or different multicast streams for the multicast session. Further, the load balancer can efficiently and effectively distribute multicast streams for different multicast sessions among the various stream processors to effectively balance the loads among the stream processors in addition to ensuring an available failover process. The load balancer, and perhaps one or more of the stream processors, may be incorporated in an application switch that is used to facilitate access to any number of servers, which represent content sources. Thus, requests from the end users are processed by the application switch to select an appropriate content source for delivery of the requested content.

### Brief Description of the Drawing Figures

The accompanying drawing figures incorporated in and forming a part of this specification illustrate several aspects of the invention, and together with the description serve to explain the principles of the invention.
FIGURE 1 is a block representation of a multicast delivery architecture according to the prior art.
FIGURE 2 is a block representation of another multicast delivery architecture according to the prior art.
FIGURE 3 is a block representation of a multicast delivery architecture according to one embodiment of the present invention.
FIGURE 4 is a flow diagram illustrating operation of a load balancer according to one embodiment of the present invention.
FIGURES 5A and 5B illustrate failover operation according to one embodiment of the present invention.
FIGURE 6 illustrates an alternative multicast delivery architecture according to a second embodiment of the present invention.
FIGURE 7 is a block representation of a load balancer according to one embodiment of the present invention.
FIGURE 8 is a block representation of a stream processor according to one embodiment of the present invention.

### Detailed Description of the Preferred Embodiments

The present invention provides a load balancer that is capable of receiving and identifying multicast streams associated with a multicast session, and selecting at least one of the multicast streams for delivery to a selected stream processor. The selected stream processor is selected from a group of stream processors that are capable of providing the Layer 4-7 processing required for the multicast stream. The load balancer will monitor the processed multicast stream provided by the output of the selected stream processor, and send the processed multicast stream toward its destination. The load balancer can detect a failure in the selected stream processor by monitoring the output of the selected stream processor with excellent reliability. If there is a failure of the selected stream processor, the load balancer will select another stream processor for processing the multicast stream, and redirect the multicast stream from the failed stream processor to the selected stream processor, wherein the process continues.

As such, different stream processors do not need to redundantly process the same multicast streams for the multicast session. Further, the load balancer can efficiently and effectively distribute multicast streams for different multicast sessions among the various stream processors to effectively balance the loads among the stream processors in addition to ensuring an available failover process. The load balancer, and perhaps one or more of the stream processors, may be incorporated in an application switch that is used to facilitate access to any number of servers, which represent content sources.

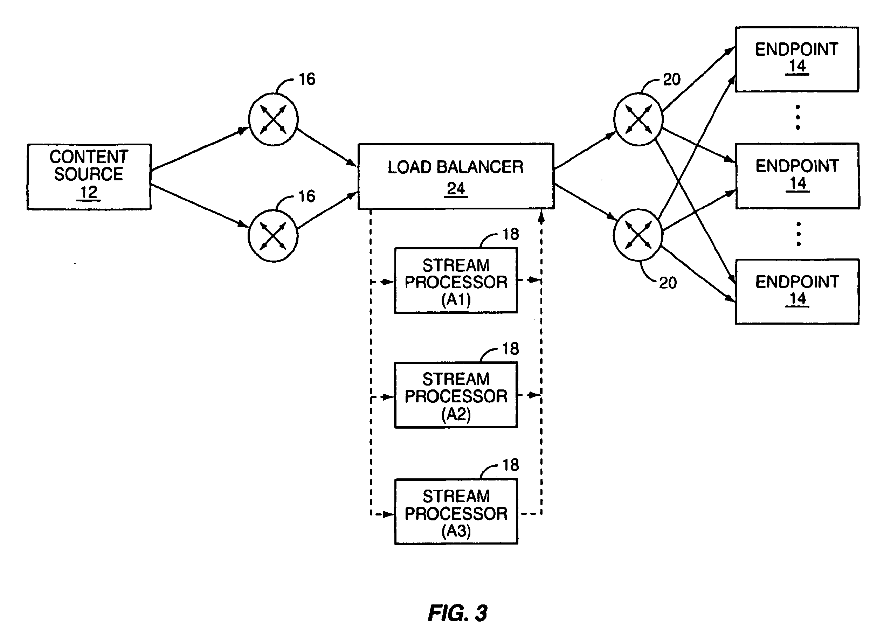

Turning now to Figure 3, a first embodiment of the present invention is illustrated. In operation, the content source 12 may provide multicast streams for multicast sessions to different upstream routers 16, which will forward the respective multicast streams to a load balancer 24. The load balancer 24 will route one or more of the multicast streams to one or more of the stream processors 18. In a preferred embodiment, only one of the multicast streams is selected from the various multicast streams in the multicast session, and is provided to a selected stream processor 18. The selected stream processor 18 will provide the requisite processing at one or more of Layers 4-7 to generate a processed multicast stream, which is sent back to the load balancer 24. The processed multicast stream is then sent to one or more downstream routers 20 in a multicast fashion. The downstream routers 20 may then multicast the resultant processed multicast streams to the appropriate endpoints 14. The stream processors 18 may simultaneously process numerous multicast streams for different multicast sessions. The Layer 4-7 processing may entail encryption, transcoding, compression, protocol conversion, watermarking, advertisement insertion, content manipulation, and the like.

The load balancer 24 may be configured to recognize the processing capabilities of the various stream processors 18 as well as determine the processing required for the various multicast streams of the multicast sessions. Again, different stream processors 18 may provide the same or different processing capabilities. As such, multicast streams arriving at the load balancer 24 from the content source 12 are analyzed to determine the required processing, and based on the required processing for the multicast streams, an appropriate stream processor 18 is selected for processing the multicast stream.

Selection of a stream processor 18 for the multicast stream may also incorporate load balancing criteria. The load balancer 24 may keep track of the number and bandwidth of multicast streams being processed by each of the stream processors 18, and select an appropriate stream processor 18 based on the relative loads of the stream processors 18 that are capable of providing the required processing for a given multicast stream. Different load balancing techniques are applicable, and the term "load balancing" does not necessarily require an even distribution of processing among the stream processors 18. For example, one stream processor 18 may be kept idle or at a relatively low capacity, such that it is available as a spare or redundant stream processor 18 in case one of the other stream processors 18 fails. The relative loads among the other stream processors 18 that have like functionality may be evenly distributed. Alternatively, the selected multicast streams of the various multicast sessions that require the same type of processing may be evenly distributed among all of the available stream processors 18, wherein the extra capacity of the stream processors 18 may be employed if any one of the stream processors 18 fails. The load of the failed stream processor 18 may be distributed among the remaining active stream processors 18. The load balancer 24 may also report when approaching stream processing capacity, or when capacity has reduced or negated the ability to failover. Those skilled in the art will recognize various load balancing techniques while employing the concepts of the present invention.

The load balancer 24 may detect a failure of a stream processor 18 in various ways. For instance, a failure may be recognized when a selected stream processor 18 stops providing a processed multicast stream. Failures may also be detected when the processed multicast stream slows down or is errantly processed. For example, the load balancer 24 may be configured to monitor processed multicast streams in a fashion to detect errors in the processing provided by the stream processor 18. Those skilled in the art will recognize various techniques for detecting failure of a stream processor 18 by monitoring the output of the stream processors 18.

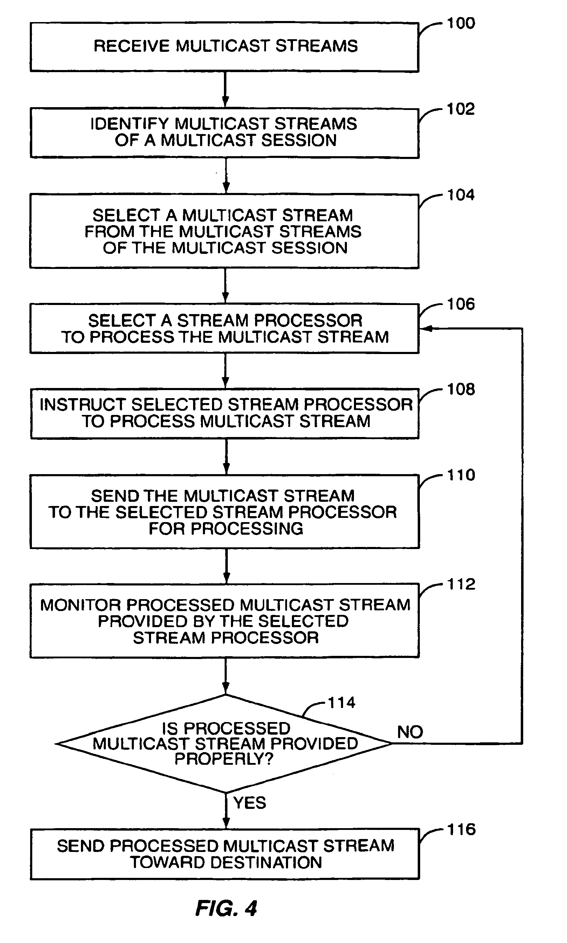

Figure 4 provides a flow diagram illustrating the operation of a load balancer 24 according to one embodiment of the present invention. Initially, the load balancer 24 will receive multicast streams from a content source 12 for a given multicast session (step 100). Since numerous multicast streams for numerous multicast sessions may be received at the load balancer 24 at any given time, the load balancer 24 will identify the multicast streams associated with a given multicast session (step 102) and select a multicast stream from the multicast streams of the multicast session to be processed (step 104). Based on the required processing, load balancing criteria, or other pertinent criteria, the load balancer 24 will select a stream processor 18 to process the multicast stream (step 106) and may instruct the selected stream processor to process the multicast stream (step 108).

The load balancer 24 will then send the multicast stream to the selected stream processor 18 for processing (step 110). The stream processor 18 will provide the requisite processing, which may entail monitoring and manipulating Layer 4-7 content to provide a processed multicast stream. The processed multicast stream is provided back to the load balancer 24, which will monitor the processed multicast stream (step 112) and determine whether the processed multicast stream was properly provided by the selected stream processor 18 (step 114). If the multicast stream is properly received by the load balancer 24 (step 114), the processed multicast stream is sent toward its destination (step 116). Although the multicast streams may be sent directly from the stream processors 18, the processed multicast stream may be received by the load balancer 24 and sent to the appropriate downstream routers 20 by the load balancer 24.

If the processed multicast stream is not properly provided by the selected stream processor 18 (step 114), the load balancer 24 will select another stream processor 18 to process the multicast stream (step 106), and the process continues, wherein the newly selected stream processor 18 will take over for the failed stream processor 18 with little or no impact on the overall processing of the multicast stream. The load balancer 24 may also choose a downstream router 20 to which to forward the multicast stream, based on its availability, if the downstream routers 20 are configured in a redundant fashion and dual-sourced multicast traffic cannot be resolved by the routing infrastructure.

Failover protection may be provided on a stream-by-stream basis. Alternatively, if one processed multicast stream is not provided properly, the load balancer 24 may reallocate all of the multicast streams being delivered to the selected stream processor 18 to one or more other stream processors 18. Even during a failover process, the load balancer 24 may use load balancing criteria to allocate the various multicast streams from a failed stream processor to one or more of the other stream processors 18.

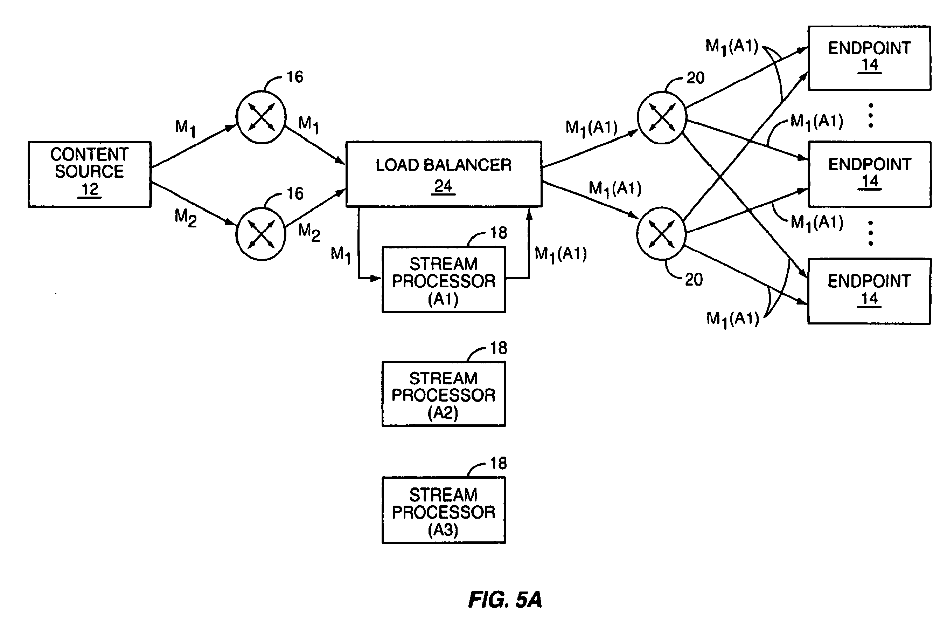

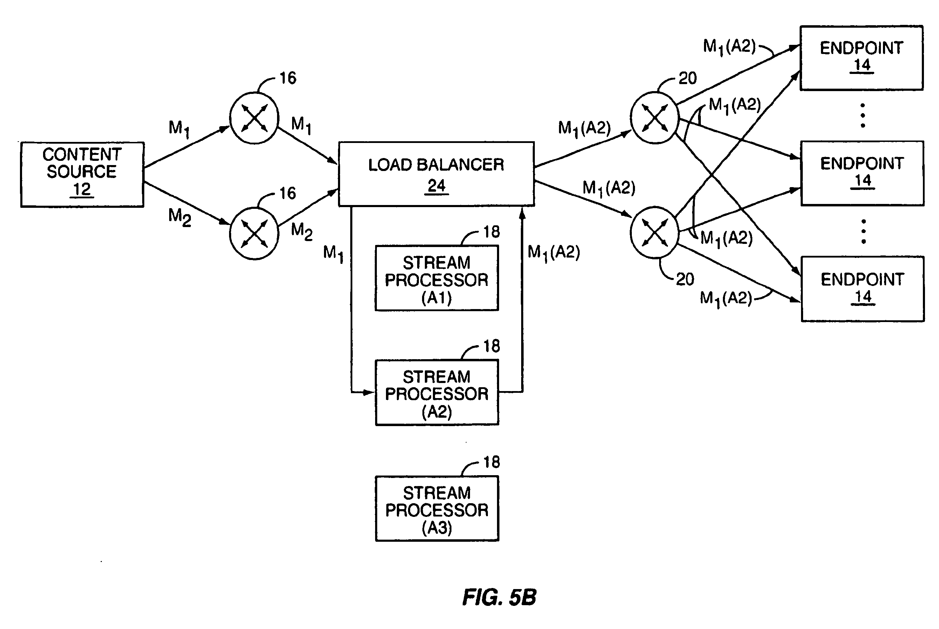

Turning now to Figures 5A and 5B, a graphical representation of a failover process is depicted. With particular reference to Figure 5A, assume that the content source 12 provides a multicast session M having two multicast streams, M₁ and M₂. The different multicast streams are sent to different upstream routers 16, which forward the multicast streams M₁, M₂ to the load balancer 24. The load balancer 24 will select one of the multicast streams M₁, and determine an appropriate stream processor 18 for processing the multicast stream M₁ of the multicast session M. In this example, stream processor A1 is selected to process the multicast stream M₁. Notably, the multicast stream M₂ may be dropped, such that only one multicast stream M₁ of the multicast session M is processed by stream processor A1. Stream processor A1 will process the multicast stream M₁ to provide a processed multicast stream M₁(A1). The load balancer 24 will receive and forward the processed multicast stream M₁(A1) to the respective downstream routers 20, which will send the processed multicast stream M₁(A1) to the respective endpoints 14, in a traditional multicast fashion.

If the load balancer 24 detects a failure in stream processor A1 by monitoring the processed multicast stream M₁(A1), the stream processor A2 may be selected as a failover stream processor for processing the multicast stream M₁. As such, the load balancer 24 will instruct stream processor A2 to process the multicast stream M₁ in a desired fashion and begin sending the multicast stream M₁ to stream processor A2 as illustrated in Figure 5B. The processed multicast stream M₁(A2) provided by the backup stream processor A2 is received by the load balancer 24, monitored, and delivered toward the multicast destinations. As depicted, the processed multicast streams M₁(A1) or M₁(A2) may be sent to each and every endpoint 14.

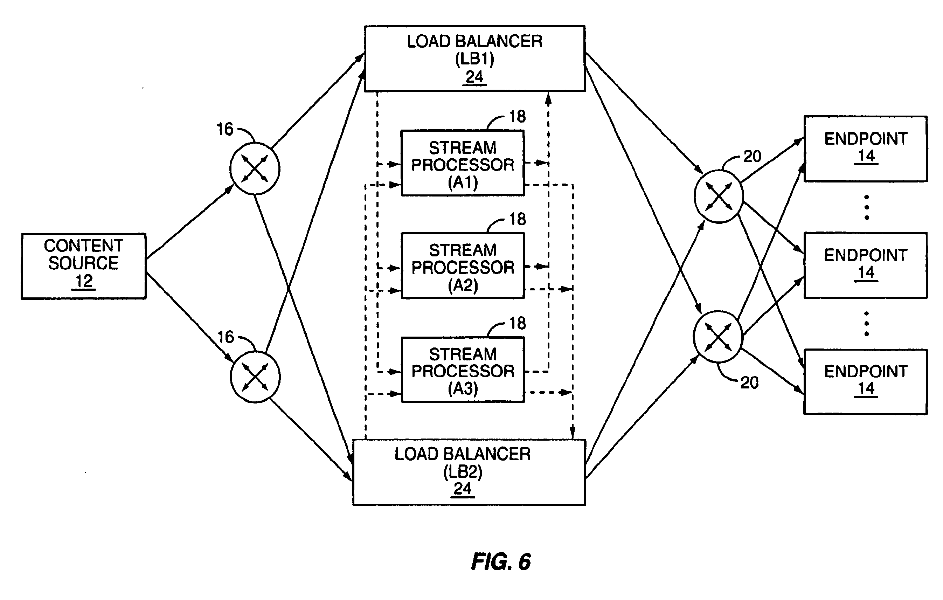

As illustrated in Figure 6, different load balancers 24 (LB1 and LB2) may share a group of stream processors 18. The load balancers 24 and the stream processors 18 will operate as described above. Notably, the multicast streams provided by a given load balancer 24 will be processed by a selected stream processor 18 and returned to the load balancer 24 from which the multicast stream originated. The load balancers 24 may communicate with each other to facilitate failover among the load balancer 24. Again, the processing may be Layer 4-7 processing. As depicted, the processed multicast stream may be sent to each and every endpoint 14.

Although the present invention is particularly beneficial and capable of processing multicast streams for a multicast session, unicast, anycast, and broadcast streams may also require processing provided by the stream processors 18. As such, the load balancers 24 may receive any of these types of content streams along with multicast streams and operate to identify the processing required and select a stream processor 18 based on the required processing and load balancing criteria.

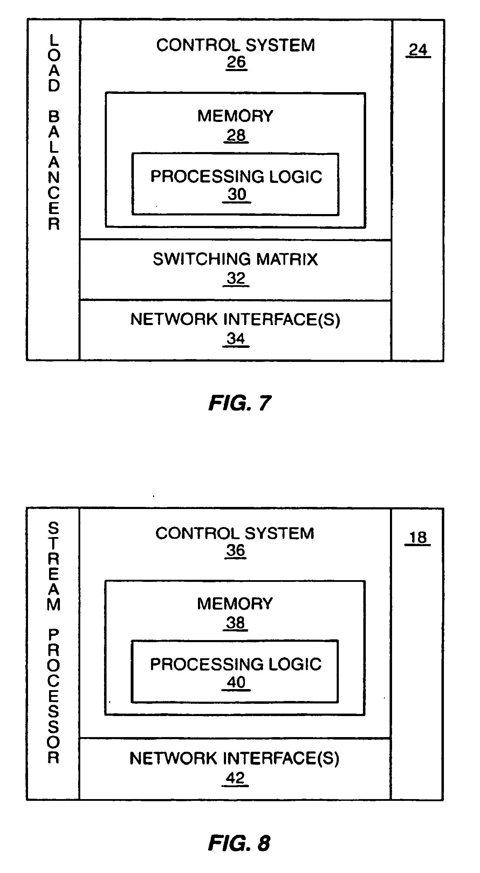

Figure 7 is a block representation of a load balancer 24. The load balancer 24 will include a control system 26 having sufficient memory 28 for the requisite processing logic 30 to operate as described above. The control system 26 will be associated with a switching matrix 32, which is coupled to one or more network interfaces 34 to facilitate receiving multicast streams, routing the multicast streams through an appropriate stream processor 18, monitoring the processed multicast streams, and delivering the multicast streams toward their multicast destinations. The switching matrix 32 and network interface(s) 34 will provide similar functionality for anycast, unicast, and broadcast streams.

Figure 8 illustrates a stream processor 18. The stream processor 18 will include a control system 36 having sufficient memory 38 for the processing logic 40 necessary to operate as described above. The control system 36 will be associated with one or more network interfaces 42 to facilitate communications with the load balancer 24. In certain embodiments, the stream processor 18 may be configured to send processed streams to the load balancer 24 as well as toward their respective destinations, depending on whether the processed streams are sent toward their destinations through the load balancer 24 or in a direct fashion.

## Claims

1. A method comprising:
• receiving (100,102) a selected multicast stream of a multicast session;
• selecting (106) a first stream processor from a plurality of stream processors to process the selected multicast stream, at least some of the other stream processors not redundantly processing the same multicast streams;
• sending (110) the selected multicast stream to the first stream processor, which will process the selected multicast stream to generate a processed selected multicast stream; and
• monitoring (112) the processed multicast stream to detect a failure of the first stream processor.

2. The method of claim 1 further comprising, upon detecting (114) the failure of the first stream processor, selecting (106) a second stream processor from the plurality of stream processors to process the selected multicast stream.

3. The method of claim 2 wherein upon detecting the failure of the first stream processor, further comprising:
• sending (110) the selected multicast stream to the second stream processor, which will process the selected multicast stream to generate the processed multicast stream; and
• monitoring (112) the processed multicast stream to detect a failure of the second stream processor.

4. The method of claim 1 wherein receiving the selected multicast stream comprises:
• receiving (100) a plurality of multicast streams of the multicast session; and
• selecting (102) one of the plurality of multicast streams as the selected multicast stream.

5. The method of claim 4 wherein only the selected multicast stream of the plurality of multicast streams is sent to one of the plurality of stream processors.

6. The method of claim 4 wherein at least one of the plurality of multicast streams is not sent to one of the plurality of stream processors.

7. The method of claim 1 further comprising receiving the processed multicast stream and sending (116) the processed multicast stream toward a multicast destination.

8. The method of claim 1 wherein the first stream processor provides at least one of the group consisting of Layer 4, Layer 5, Layer 6, and Layer 7 processing on the selected multicast stream to generate the processed multicast stream.

9. The method of claim 1 wherein the first stream processor is selected from the plurality of stream processors based on a type of processing required for the selected multicast stream, and the first stream processor provides the type of processing required for the selected multicast stream.

10. The method of claim 9 further comprising determining the type of processing required for the selected multicast stream based on information contained in the selected multicast stream.

11. The method of claim 1 wherein the first stream processor is selected from the plurality of stream processors based on a load balancing criterion that is a function of processing loads at certain ones of the plurality of stream processors.

12. The method of claim 11 wherein the second stream processor is selected from the plurality of stream processors based on the load balancing criterion.

13. The method of claim 1 wherein the selected multicast stream is at least one of a group consisting of an audio content stream and a video content stream.

14. A system comprising:
• at least one communication interface (42); and
• a control system (36) associated with the at least one communication interface and adapted to:
• receive a selected multicast stream of a multicast session;
• select a first stream processor from a plurality of stream processors to process the selected multicast stream at least some of the other stream processors not redundantly processing the same multicast streams;
• send the selected multicast stream to the first stream processor, which will process the selected multicast stream to generate a processed multicast stream; and
• monitor the processed multicast stream to detect a failure of the first stream processor.

## Patentansprüche

1. Verfahren, das Folgendes umfasst:
• Empfangen (100,102) eines ausgewählten Multicast-Stroms einer Multicast-Sitzung;
• Auswählen (106) eines ersten Stromprozessors aus mehreren Stromprozessoren, um den ausgewählten Multicast-Strom zu verarbeiten, wobei mindestens einige der anderen Stromprozessoren nicht redundant die selben Multicast-Ströme verarbeiten;
• Senden (110) des ausgewählten Multicast-Stroms zu dem ersten Stromprozessor, der den ausgewählten Multicast-Strom verarbeitet, um einen verarbeiteten ausgewählten Multicast-Strom zu erzeugen; und
• Überwachen (112) des verarbeiteten Multicast-Stroms, um eine Störung des ersten Stromprozessors zu erkennen.

2. Verfahren nach Anspruch 1, weiter umfassend, nach dem Erkennen (114) der Störung des ersten Stromprozessors, das Auswählen (106) eines zweiten Stromprozessors aus den mehreren Stromprozessoren, um den ausgewählten Multicast-Strom zu verarbeiten.

3. Verfahren nach Anspruch 2, wobei nach dem Erkennen der Störung des ersten Stromprozessors, weiter umfassend:
• Senden (110) des ausgewählten Multicast-Stroms zu dem zweiten Stromprozessor, der den ausgewählten Multicast-Strom verarbeitet, um den verarbeiteten Multicast-Strom zu erzeugen; und
• Überwachen (112) des verarbeiteten Multicast-Stroms, um eine Störung des zweiten Stromprozessors zu erkennen.

4. Verfahren nach Anspruch 1, wobei das Empfangen des ausgewählten Multicast-Stroms Folgendes umfasst:
• Empfangen (100) mehrerer Multicast-Ströme der Multicast-Sitzung; und
• Auswählen (102) eines der mehreren Multicast-Ströme als den ausgewählten Multicast-Strom.

5. Verfahren nach Anspruch 4, wobei nur der ausgewählte Multicast-Strom der mehreren Multicast-Ströme zu einem der mehreren Stromprozessoren gesendet wird.

6. Verfahren nach Anspruch 4, wobei mindestens einer der mehreren Multicast-Ströme nicht zu einem der mehreren Stromprozessoren gesendet wird.

7. Verfahren nach Anspruch 1, weiter umfassend das Empfangen des verarbeiteten Multicast-Stroms und Senden (116) des verarbeiteten Multicast-Stroms zu einer Multicast-Destination.

8. Verfahren nach Anspruch 1, wobei der erste Stromprozessor mindestens eine der Gruppe, bestehend aus Layer 4-, Layer 5-, Layer 6- und Layer 7-Verarbeitung an dem ausgewählten Multicast-Strom, bereitstellt, um den verarbeiteten Multicast-Strom zu erzeugen.

9. Verfahren nach Anspruch 1, wobei der erste Stromprozessor basierend auf einer für den ausgewählten Multicast-Strom benötigten Art von Verarbeitung aus den mehreren Stromprozessoren ausgewählt wird und der erste Stromprozessor die für den ausgewählten Multicast-Strom benötigte Art der Verarbeitung bereitstellt.

10. Verfahren nach Anspruch 9, weiter umfassend das Bestimmen der Art der für den ausgewählten Multicast-Strom benötigten Verarbeitung basierend auf in dem ausgewählten Multicast-Strom enthaltenen Informationen.

11. Verfahren nach Anspruch 1, wobei der erste Stromprozessor basierend auf einem Lastausgleichskriterium aus den mehreren Stromprozessoren ausgewählt wird, bei dem es sich um eine Funktion von Verarbeitungslasten an gewissen der mehreren Stromprozessoren handelt.

12. Verfahren nach Anspruch 11, wobei der zweite Stromprozessor basierend auf dem Lastausgleichskriterium aus den mehreren Stromprozessoren ausgewählt wird.

13. Verfahren nach Anspruch 1, wobei es sich bei dem ausgewählten Multicast-Strom um mindestens einen aus einer Gruppe handelt, die aus einem Audioinhaltsstrom und einem Videoinhaltsstrom besteht.

14. System, das Folgendes umfasst:
• mindestens eine Kommunikationsschnittstelle (42); und
• ein Steuersystem (36), das mit der mindestens einen Kommunikationsschnittstelle assoziiert ist und dazu angepasst ist:
• einen ausgewählten Multicast-Strom einer Multicast-Sitzung zu empfangen;
• einen ersten Stromprozessor aus mehreren Stromprozessoren auszuwählen, um den ausgewählten Multicast-Strom zu verarbeiten, wobei mindestens einige der anderen Stromprozessoren nicht redundant die selben Multicast-Ströme verarbeiten;
• den ausgewählten Multicast-Stroms zu dem ersten Stromprozessor zu senden, der den ausgewählten Multicast-Strom verarbeitet, um einen verarbeiteten Multicast-Strom zu erzeugen; und
• den verarbeiteten Multicast-Stroms zu überwachen, um eine Störung des ersten Stromprozessors zu erkennen.

## Revendications

1. Un procédé comprenant :
• la réception (100, 102) d'un flux de multidiffusion sélectionné d'une session de multidiffusion,
• la sélection (106) d'un premier processeur de flux d'une pluralité de processeurs de flux destiné à traiter le flux de multidiffusion sélectionné, au moins certains des autres processeurs de flux ne traitant pas de manière redondante les mêmes flux de multidiffusion,
• l'envoi (110) du flux de multidiffusion sélectionné au premier processeur de flux, qui traitera le flux de multidiffusion sélectionné de façon à générer un flux de multidiffusion sélectionné traité, et
• la surveillance (112) du flux de multidiffusion traité de façon à détecter une défaillance du premier processeur de flux.

2. Le procédé selon la Revendication 1 comprenant en outre, après détection (114) de la défaillance du premier processeur de flux, la sélection (106) d'un deuxième processeur de flux de la pluralité de processeurs de flux destiné à traiter le flux de multidiffusion sélectionné.

3. Le procédé selon la Revendication 2, qui, lors de la détection de la défaillance du premier processeur de flux, comprend en outre :
• l'envoi (110) du flux de multidiffusion sélectionné au deuxième processeur de flux, qui traitera le flux de multidiffusion sélectionné de façon à générer le flux de multidiffusion traité, et
• la surveillance (112) du flux de multidiffusion traité de façon à détecter une défaillance du deuxième processeur de flux.

4. Le procédé selon la Revendication 1 où la réception du flux de multidiffusion sélectionné comprend :
• la réception (100) d'une pluralité de flux de multidiffusion de la session de multidiffusion, et
• la sélection (102) d'un flux de la pluralité de flux de multidiffusion comme étant le flux de multidiffusion sélectionné.

5. Le procédé selon la Revendication 4 où uniquement le flux de multidiffusion sélectionné de la pluralité de flux de multidiffusion est envoyé à un processeur de la pluralité de processeurs de flux.

6. Le procédé selon la Revendication 4 où au moins un flux de la pluralité de flux de multidiffusion n'est pas envoyé à un processeur de la pluralité de processeurs de flux.

7. Le procédé selon la Revendication 1 comprenant en outre la réception du flux de multidiffusion traité et l'envoi (116) du flux de multidiffusion traité vers une destination de multidiffusion.

8. Le procédé selon la Revendication 1 où le premier processeur de flux fournit au moins une traitement du groupe se composant des traitements de Couche 4, de Couche 5, de Couche 6 et de Couche 7 sur le flux de multidiffusion sélectionné de façon à générer le flux de multidiffusion traité.

9. Le procédé selon la Revendication 1 où le premier processeur de flux est sélectionné dans la pluralité de processeurs de flux en fonction d'un type de traitement requis pour le flux de multidiffusion sélectionné, et le premier processeur de flux fournit le type de traitement requis pour le flux de multidiffusion sélectionné.

10. Le procédé selon la Revendication 9 comprenant en outre la détermination du type de traitement requis pour le flux de multidiffusion sélectionné en fonction d'informations contenues dans le flux de multidiffusion sélectionné.

11. Le procédé selon la Revendication 1 où le premier processeur de flux est sélectionné dans la pluralité de processeurs de flux en fonction d'un critère d'équilibrage de charges qui est une fonction des charges de traitement sur certains processeurs de la pluralité de processeurs de flux.

12. Le procédé selon la Revendication 11 où le deuxième processeur de flux est sélectionné dans la pluralité de processeurs de flux en fonction du critère d'équilibrage de charges.

13. Le procédé selon la Revendication 1 où le flux de multidiffusion sélectionné est au moins un flux d'un groupe se composant d'un flux de contenus audio et un flux de contenus vidéo.

14. Un système comprenant :
• au moins une interface de communication (42), et
• un système de commande (36) associé à la au moins une interface de communication et adapté de façon à :
• recevoir un flux de multidiffusion sélectionné d'une session de multidiffusion,
• sélectionner un premier processeur de flux d'une pluralité de processeurs de flux destiné à traiter le flux de multidiffusion sélectionné, au moins certains des autres processeurs de flux ne traitant pas de manière redondante les mêmes flux de multidiffusion,
• envoyer le flux de multidiffusion sélectionné au premier processeur de flux, qui traitera le flux de multidiffusion sélectionné de façon à générer un flux de multidiffusion traité, et
• surveiller le flux de multidiffusion traité de façon à détecter une défaillance du premier processeur de flux.
